# EUROPEAN PATENT SPECIFICATION

(11) **EP 1 956 819 B1**
(45) Date of publication and mention of the grant of the patent: **16.05.2012**
(21) Application number: 08002376.5
(22) Date of filing: 08.02.2008
(51) Int. Cl.: H04L 12/24

(54) **System and method for charging**
Aufladesystem und -verfahren
Système et procédé de chargement

(30) Priority: 09.02.2007 CN 200710005014; 08.08.2007 WO PCT/CN2007/070434
(43) Date of publication of application: 13.08.2008
(73) Proprietor: Huawei Technologies Co., Ltd., Longgang District, Shenzhen Guangdong 518129 (CN)
(72) Inventor: Yang, Jialong, Shenzhen Guangdong Province 518129 (CN); Yan, Xuesong, Shenzhen Guangdong Province 518129 (CN); Wang, Yue, Shenzhen Guangdong Province 518129 (CN); Wu, Wenkui, Shenzhen Guangdong Province 518129 (CN); Zhang, Weixing, Shenzhen Guangdong Province 518129 (CN); Zhao, Linhua, Shenzhen Guangdong Province 518129 (CN); Li, Qiang, Shenzhen Guangdong Province 518129 (CN)
(74) Representative: Pfenning, Meinig & Partner GbR

(56) References cited:
- WO-A-2005/001641
- WO-A-2005/122469
- GB-A- 2 372 405
- US-A1- 2002 147 903

## Description

### Field of the Invention

The present invention relates to the technical field of communication service management, particularly to a system and method for charging.

### Background of the Invention

As the communication technology develops, more and more types of value added data services are emerging. The value added data services become a key point of Network Operators' and Service Providers' (SPs) revenues growth. In order to match flexible service operation policies, a network operator usually provides a variety of charging models for the SPs to select.
In patent application "POLICY SERVICE SYSTEM AND METHODOLOGY", (Ambarish Chaudhari et al., International Publication Number WO 2005/001641 A2, JULY SYSTEMS INC [US], 6 January 2005), a method for providing services to mobile users is disclosed, and also the detailed steps about how SPs offer their services via the network infrastructure owned by an operator. In the disclosed method, SPs create services using service objects created by the operator, the service objects can be configured for different service and business priorities of the operator, and charging models attached to such service objects will be used to define the manner how the services are carried out. Although those charging models can be of various kinds, such as pay per use, pay per duration, pay per event and the like, considering about the charging mechanisms used for roll-out services of multiple SP applications, the applicant has found that room still exists for further improvement as for the reasons below.

Generally, for existing data services, various charging models have been developed in advance and predefined in a service platform. Taking a Mobile Data Service Platform (MDSP) as an example, the charging models are usually provided and applied in a manner as follows.

An SP logs in the MDSP. The MDSP provides a charging model selection interface in accordance with the types of inherent built-in charging models. The SP selects a charging model for a service released by the SP.

The SP fills in information of parameters of the selected charging model. For example, if the charging model "Monthly Charging" is selected, then it is necessary to fill in the parameter "Monthly Fee" of the charging model;

The filled information is submitted to the MDSP, and thus the pricing for a service is completed.

When the service is used, the MDSP executes a corresponding charging logic, to perform charging based on the parameter information defined by the SP.

If the SP finds that a charging model required by a service doesn't exist, he will feed the information back to the network operator, and the network operator will inform the MDSP provider to modify. To perform the modification, the MDSP usually need to complete at least the following processes: analyzing the parameters of the new charging model, and adding a corresponding management interface in the MDSP; adding a cost calculation function or process for the charging model in the MDSP; testing the new MDSP system; and updating the original MDSP system to the new MDSP system. After upgrading the MDSP system, the SP may select the new charging model in the new system so as to price the service.

During making the present invention, the inventor found the above pricing manner had at least the following drawbacks: Because the charging models are developed together with the management system, the existing system itself should be modified when a new charging model is required, involving heavy workload and a long development period, and thus hindering quick development of data services to some extent. In addition, upgrading the entire system may cause service interruption and thus bring severe adverse effect to the subscribers' experience. Moreover, long-time system development and test will reduce the speed of response to service demands, and thus affect quick deployment and popularization of services of the SPs.

### Summary of the Invention

One embodiment of the present invention provides a method and a system for providing a charging model, so that it is unnecessary to upgrade an existing management system when adding a new charging model, thus simplifying and speeding up development and deployment of new charging models.

Another embodiment of the present invention provides a method and a system for charging, so as to facilitate deployment and popularization of chargeable services.

One embodiment of the present invention provides a method for providing a charging model, including: receiving a charging model selection request related to a service, providing charging plug-in IDs corresponding to various charging models respectively; searching for a corresponding charging plug-in in accordance with a selected charging plug-in ID; loading the corresponding charging plug-in, and obtaining a parameter defining item of the corresponding charging plug-in via a parameter definition interface; providing the parameter defining item and receiving a parameter setting obtained by setting a parameter based on the parameter defining item; storing the association between the service and the charging plug-in ID and the association between the service and the parameter setting.

Another embodiment of the present invention provides a system for providing a charging model, including: a request receiving unit, adapted to receive a charging model selection request related to a service; an ID providing unit, adapted to provide charging plug-in IDs corresponding to various charging models respectively; a searching unit, adapted to search for a corresponding charging plug-in in accordance with the selected charging plug-in ID; a loading unit, adapted to load the corresponding charging plug-in; a parameter definition interface, adapted to obtain a parameter defining item of the corresponding charging plug-in; and a setting/storage unit, adapted to provide the parameter defining item and receive a parameter setting obtained by setting a parameter based on the parameter defining item, and store an association between the service and the charging plug-in ID and an association between the service and the parameter setting.

Further another embodiment of the present invention also provides a method for charging, including: receiving a charging request related to a service; determining a charging plug-in ID corresponding to the service in accordance with a stored association between the service and the charging plug-in ID, and searching for the corresponding charging plug-in; loading the charging plug-in, and obtaining a cost calculation item of the charging plug-in via the cost calculation interface; obtaining a parameter setting related to the service in accordance with a stored association between the service and parameter setting, and substituting the parameter setting into a calculation method provided in the cost calculation item to obtain a charging result.

Still another embodiment of the present invention provides a charging management system, including: a charging plug-in providing unit, a model setting unit and a definition interface unit; the charging plug-in providing unit is adapted to provide a corresponding charging plug-in in accordance with a charging plug-in ID; the model setting unit is adapted to receive a charging model selection request related to a service, provide charging plug-in IDs corresponding to various charging models, search for a corresponding charging plug-in in accordance with a selected charging plug-in ID, provide a parameter defining item obtained via the definition interface unit and receive a parameter setting obtained by setting a parameter based on the parameter defining item, and store an association between the service and the charging plug-in ID and an association between the service and the parameter setting; and the definition interface unit is adapted to load the charging plug-in from the charging plug-in providing unit in accordance with a searching result from the model setting unit, obtain the parameter definition item of the charging plug-in, and provide the parameter definition item to the model setting unit.

According to the embodiments of the present invention, by adopting a scheme of selecting a charging model or performing charging through loading charging plug-ins corresponding to various charging models, the charging plug-ins that provide charging models are independent of the management system per se, and the management system may obtain appropriate information from the charging plug-ins via standard interfaces. Therefore, it is unnecessary to upgrade an existing management system when adding a new charging model, thus simplifying and speeding up development and deployment of new charging models, making the development of charging models completely open, and speeding up diversification of data service charging models.

### Brief Description of the Drawings

Figure 1 is a schematic flow diagram of a method for providing a charging model according to one embodiment of the present invention;

Figure 2 is a structural representation of a system for providing a charging model according to one embodiment of the present invention;

Figure 3 is a schematic flow diagram of a method for charging according to one embodiment of the present invention; and

Figure 4 is a structural representation of a charging management system according to another embodiment of the present invention.

### Detailed Description of the Embodiments

One embodiment of the present invention provides a method for providing a charging model. In the method for providing a charging model, the charging model is selected by loading charging plug-ins corresponding to various charging models. Correspondingly, one embodiment of the present invention also provides a method for charging and a charging management system applicable to the method for providing a charging model and the method for charging. Hereunder the methods and the system will be described in detail.

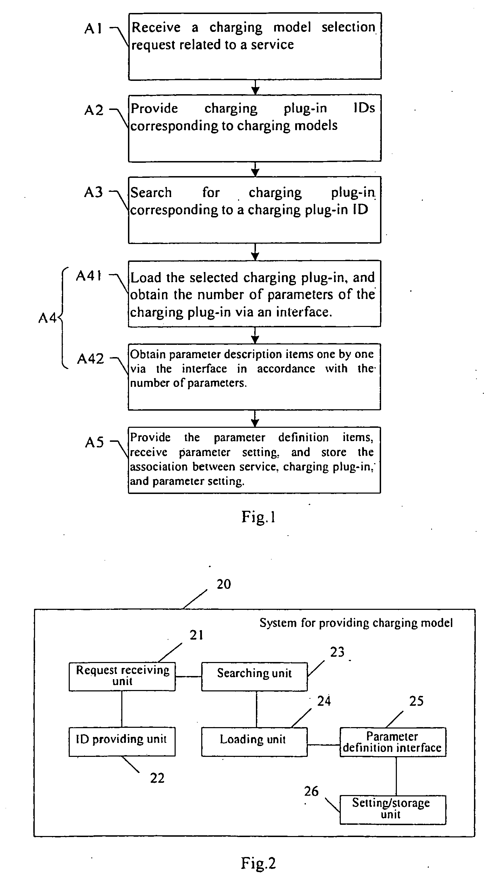

One embodiment is a method for providing a charging model, the flow of which is shown in Figure 1, including:

Block A1: Receiving a charging model selection request corresponding to a service.

When a new service is to be released, the SP usually logs in a management system provided by the network operator to select an appropriate charging model for the new service. Therefore, the charging model selection request is associated to a specific service. This process may be performed by presenting to the SP a user interface with relevant content by means of the management system, and capturing input from the SP on the interface.

Block A2: Providing charging plug-in IDs corresponding to various charging models.

In this embodiment, various charging models exist in the form of plug-in independent of the management system. Specifically, the charging plug-in may be implemented as:

a text file in either .xml format or a user-defined format;

a binary file, which may be in a user-defined format; or

a link library file, which may be a .dll file on the Windows platform or a .o file on the UNIX platform.

The relationship between a charging plug-in and the management system in the embodiment of the present invention is similar to the relationship between a common plug-in and an application platform applying the common plug-in: The plug-in provides information or a function in a format that may be understood by the application platform, while the application platform loads the plug-in via a corresponding interface to obtain corresponding information from the plug-in or executes a corresponding function. Although different plug-ins of same kind may be different in content, they may be accessed and used via a uniform interface by the application platform. Therefore, the application platform may implement rich functions by loading a variety of plug-ins while keeping itself stable relatively.

The charging plug-ins in this embodiment may be stored in a centralized manner in a charging plug-in storage directory provided in the management system, or in a special storage device. To provide the charging models for the SP to select, the IDs of the charging plug-ins for the charging models may be presented on a user interface. A charging plug-in ID may be a simple distinguishing ID, or, for easy understanding, a descriptive ID reflecting the content of the charging model, for example, usually the name of the charging model. A list providing charging plug-in IDs (hereafter referred to as "charging plug-in list") may be provided in either of the following ways:

One way is to store the charging plug-in IDs corresponding to the charging models in the management system. The correspondence may be stored by means of registration when the charging plug-in is stored in the directory. An advantage of this way is that the charging plug-in list may be invoked quickly.

The other way is to take the charging plug-in ID as a part of the content provided by the charging plug-in. When the management system wants to present a charging plug-in list, it loads the charging plug-ins stored in the directory, obtains the names of charging models corresponding to the charging plug-ins via the standard interface, and presents the names of the charging plug-ins in an appropriate order. An advantage of this way is that all information related to the charging plug-ins is obtained via a standard interface, which may facilitate normalized design and management of system programs.

Block A3: Searching for a corresponding charging plug-in in accordance with a selected charging plug-in ID.

This Block may be implemented by obtaining, via the management system, the selection input from the SP on the charging plug-in list interface provided in Block A2. If the management system provides the charging plug-in list in the first way discussed in Block A2, the charging plug-in may be searched out in accordance with the stored association between the selected charging plug-in ID and the charging plug-in. If the management system provides the charging plug-in list in the second way discussed in Block A2, the charging plug-in may be searched out in accordance with the association between the ID and the charging plug-in that is logged when the selected charging plug-in ID is obtained;

Block A4: Loading the selected charging plug-in, and obtaining a parameter defining item of the charging plug-in via a parameter definition interface.

Usually, each charging model involves parameters to be set to form a specific charging standard, such as the parameter "Monthly Fee" in the charging model "Monthly Charging", the parameter "Fee per Use" in the charging model "Charging per Use" and etc. The management system may obtain the parameter defining item related to parameter setting in the charging plug-in via a standard interface and present the parameter defining item on the user interface.

A simple interface configuration for obtaining the parameter defining item is to provide an interface that can be used to obtain items describing parameters to be set, regardless of the number of the parameters to be set. To further facilitate the user's use and further normalize the interface, the embodiment provides an interface scheme, in which an interface for obtaining the number of parameters and an interface for obtaining the parameter describing items are adopted. The obtaining Block includes:

Block A41: Loading the selected charging plug-in, and obtaining the number of parameters of the charging plug-in via the parameter number interface.

Block A42: Obtaining the parameter describing items of the charging plug-in one by one via the parameter description interface in accordance with the number of parameters.

A parameter describing item provided by the charging plug-in is mainly used to describe a parameter to be set. In a simple situation, the name of the parameter to be set is given, thus the parameter description interface may be simply configured as a parameter name interface.

To facilitate the user's use, the embodiment provides a scheme for implementing the parameter description interface. That is, the parameter description interface is configured as including a parameter name interface and a parameter data type interface. The name of the parameter of the charging plug-in may be obtained via the parameter name interface, and the parameter data type corresponding to each parameter name may be obtained via the parameter data type interface.

Block A5: Providing the parameter defining item and receiving the parameter setting made in accordance with the parameter defining item, and storing the association between the service and the charging plug-in ID and the association between the service and the parameter setting.

The management system may provide the obtained parameter-describing items to the user in accordance with the obtained number of parameters. For example, the parameter-describing items may be presented on the user interface so as to obtain the user's setting input. If the parameter description obtained in Block A42 is just a parameter name, the received parameter setting from the user may be of any data type. In that case, the system may judge the validity of the parameter value set by the user and make a proper prompt. If the parameter description obtained in Block A42 includes a parameter name and a parameter data type, the received parameter setting should match the permitted parameter type.

The management system may store the priced service, the charging plug-in ID selected by the user for the service and the user's parameter setting together in association with each other. Of course, as an alternative scheme, the association between the service and the charging plug-in ID and the association between the service and the parameter setting may be stored separately. It should be noted that the so called "(storage of) association" should be understood as such in essence, i.e. based on a service, the charging model and the parameter setting related to the service may be retrieved by use of the stored association. In form, what is stored may be a list of services corresponding to charging plug-in IDs and parameter settings. Alternatively, one or more objects in the list may be replaced with distinguishing IDs and the association may be realized by means of indirect correspondence.

One embodiment is a system for providing a charging model 20 as shown in Figure 2 including: a receiving unit 21, an ID providing unit 22, a searching unit 23, a loading unit 24, a parameter definition interface 25, and a setting/storage unit 26. The receiving unit 21 is adapted to receive a charging model selection request related to a service and a selection with respect to a charging plug-in ID. The ID providing unit 22 is adapted to provide a charging plug-in ID corresponding to each charging model respectively. The searching unit 23 is adapted to search for a corresponding charging plug-in in accordance with the selected charging plug-in ID. The loading unit 24 is adapted to load the charging plug-in. The parameter definition interface 25 is adapted to obtain a parameter defining item of the charging plug-in. The setting/storage unit 26 is adapted to provide the parameter defining item and receive a parameter setting obtained by setting a parameter based on the parameter defining item, and store an association between the service and the charging plug-in ID and an association between the service and the parameter setting.

In the system according to this embodiment, the parameter definition interface 25 may be a parameter description interface adapted to obtain a parameter-describing item of the charging plug-in. Also, the parameter definition interface 25 may include a parameter name interface and a parameter data type interface. The parameter name interface is adapted to obtain the name of the parameter of the charging plug-in. The parameter data type interface is adapted to obtain a respective parameter data type corresponding to each parameter name.

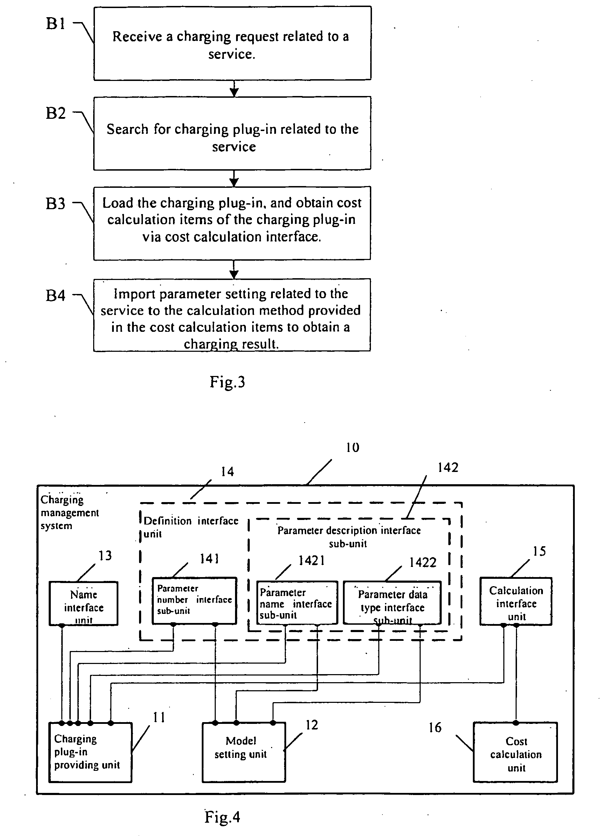

One embodiment is a method for charging, with the process flow shown in Figure 3. This embodiment shows an actual charging process. The method for charging includes the following processes:

Block B1: Receiving a charging request related to a service.

When a charging event occurs for a service, for example, when the monthly settlement date for a monthly charged service becomes due, or when a service charged per use is demanded by a user, a relevant charging request will be triggered and sent to the management system. This block B 1 may be implemented with an existing process.

Block B2: Determining a charging plug-in ID corresponding to the service in accordance with the stored association between the service and the charging plug-in ID, and searching for a corresponding charging plug-in.

Since a charging model has been set for each service, on the basis of the charging model providing process provided in embodiment 1, there is a correspondence between each service and each charging plug-in ID. Based on the correspondence, a charging plug-in that provides the charging model for the service may be determined;

Block B3: Loading the charging plug-in, and obtaining cost calculation items of the charging plug-in via a cost calculation interface.

The content of a cost calculation item of a charging plug-in is a scheme adopted to calculate the cost, and the scheme may be manifested as a mathematical/logic expression containing every parameter of the charging plug-in.

Block B4: Obtaining parameter setting associated with the service in accordance with the stored association between the service and the parameter setting, and importing the parameter setting to the calculation method provided in the cost calculation item to obtain a charging result;

Similar to the description in Block B2, based on the charging model providing process provided in embodiment 1, there is a correspondence between each service and parameter setting respectively. Based on the correspondence, specific parameter values required for cost calculation of the charging plug-in corresponding to the service may be obtained.

One embodiment: A charging management system 10 as shown in Figure 3 includes a charging plug-in providing unit 11, a model setting unit 12, and a definition interface unit 14. The charging management system 10 may further include a name interface unit 13, a calculation interface unit 15, and a cost calculation unit 16.

The charging plug-in providing unit 11 is adapted to provide a corresponding charging plug-in in accordance with a charging plug-in ID;

The model setting unit 12 is adapted to receive a charging model selection request related to a service, to provide, as the charging plug-in ID, the charging model name of the charging plug-in obtained by the name interface unit 13 , to search for the corresponding charging plug-in in accordance with the selected charging plug-in ID, to provide a parameter defining item obtained by the definition interface unit 14 and receive parameter setting obtained by setting a parameter based on the parameter defining item (setting the parameter includes setting a respective parameter value corresponding to each parameter name and its data type), and to store the association between the service and the charging plug-in ID and the association between the service and the parameter setting.

The name interface unit 13 is adapted to load charging plug-ins from the charging plug-in providing unit 11, obtain a charging model name of each charging plug-in, and provide the charging model name to the model setting unit 12.

The definition interface unit 14 is adapted to load the charging plug-in from the charging plug-in providing unit 11 in accordance with the searching result from the model setting unit 12, obtain the parameter defining item of the charging plug-in and provide the parameter defining item to the model setting unit 12. The definition interface unit 14 includes a parameter description interface sub-unit 142 and may further include a parameter number interface sub-unit 141.

The parameter number interface sub-unit 141 is adapted to load the charging plug-in from the charging plug-in providing unit 11, obtain the number of parameters of the charging plug-in, and provide the number to the model setting unit 12.

The parameter description interface sub-unit 142 is adapted to load the charging plug-in from the charging plug-in providing unit 11, obtain the parameter-describing items of the charging plug-in one by one in accordance with the number of parameters provided by the parameter number interface sub-141 to the model setting unit 12, and provide the parameter-describing items to the model setting unit 12;

The parameter description interface sub-unit 142 includes a parameter name interface sub-unit 1421 adapted to obtain the name of each parameter of the charging plug-in and a parameter data type interface sub-unit 1422 adapted to obtain the parameter data type corresponding to each parameter name.

The cost calculation unit 16 is adapted to receive the charging request related to the service, search for the corresponding charging plug-in in accordance with the charging plug-in ID corresponding to the service, obtain the calculation scheme from the cost calculation item provided by the calculation interface unit 15, and import the parameter setting related to the service to the calculation scheme to obtain a charging result..

The calculation interface unit 15 is adapted to load the charging plug-in from the charging plug-in providing unit 11 in accordance with the search result provided from the cost calculation unit 16, obtain the cost calculation item of the charging plug-in, and provide the cost calculation item to the cost calculation unit 16.

The charging management system in this embodiment may be applied to embodiment 1 and embodiment 2.

, Another embodiment, according to the invention, is described in the following..

We may suppose that the SP is going to provide a new service "Weather Forecast" and plan to release the service on a service platform with a charging model "Monthly Charging + Charging per Use". The charging model is described as: a user who subscribes the service pay a certain amount of "monthly fee" per month and a certain amount of "fee per use" each time he uses the service. However, the charging model "Monthly Charging + Charging per Use" doesn't exist in the current charging management system.

Suppose the charging management system provides the following standard charging plug-in interfaces: a model name interface, a parameter number interface, a parameter name interface, a parameter data type interface and a cost calculation interface.

A charging plug-in may be developed for the charging model "Monthly Charging + Charging per Use" based on the above standard interfaces. Suppose the charging plug-in is in the form of .dll file, the charging plug-in for the charging model "Monthly Charging + Charging per Use" should provide the following contents corresponding to the interfaces in the management system:
1) Scheme for providing the name of the charging model: return the character string "Monthly Charging" via the model name interface;
2) Scheme for providing the number of parameters: return "2" via the parameter number interface;
3) Scheme for providing the name of parameter 1: return "Monthly Fee" via the parameter name interface;
4) Scheme for providing the data type of parameter 1: return "Integer" via the parameter data type interface;
5) Scheme for providing the name of parameter 2: return "Fee per Use" via the parameter name interface;
6) Scheme for providing the data type of parameter 2: return "Integer" via the parameter data type interface;
7) Scheme for providing a cost calculation strategy: return a feasible charging strategy via the cost calculation interface.

Store the above charging plug-in for the charging model "Monthly Charging + Charging per Use" in a directory for charging plug-ins in the management system. Now, the deployment of the new charging model is completed.

The charging model providing processes for the new service "Weather Forecast" is as follows:
1. The SP logs in the charging management system for the purpose of selecting a charging model for the new service "Weather Forecast". In this process, the management system reads all available charging plug-ins from its directory for storing charging plug-ins, reads the charging model name from each charging plug-in via the model name interface, and displays the charging model names, including the charging model name "Monthly Charging + Charging per Use", to the SP in an appropriate order;
2. The SP selects the charging model "Monthly Charging + Charging per Use". Now, the charging management system invokes the "method for providing the number of parameters" in the charging plug-in "Monthly Charging + Charging per Use" via the parameter number interface, and learns that the charging model has two parameters;
3. The charging management system invokes the "method for providing the name of parameter 1" in the charging plug-in "Monthly Charging + Charging per Use" via the parameter name interface, invokes the "method for providing the data type of parameter 1" via the parameter data type interface, and learns that the name of parameter 1 is "Monthly Fee" and the value type of parameter 1 is Integer. Then, the charging management system may display a tag "Monthly Fee" on the user interface, followed by an integer value input box;
4. Likewise, the charging management system invokes the "method for providing the name of parameter 2" and the "method for providing the data type of parameter 2", and learns that the name of parameter 2 is "Fee per Use" and the value type of parameter 2 is Integer. The charging management system may display a tag "Fee per Use" on the user interface, followed by an integer value input box;
5. The SP fills the input box for "Monthly Fee" with "300" (cents) and fills the input box for "Fee per Use" with "50" (cents), and submits the inputs to the charging management system to perform service pricing;
6. The charging management system stores the association between the service "Weather Forecast" and the charging model "Monthly Charging + Charging per Use", the monthly fee 300 cents and the fee per use 50 cents. Now, the charging strategy for the service "Weather Forecast" is defined as "Monthly Charging + Charging per Use, monthly fee being 300 cents and fee per use being 50 cents".

The charging process for the service "Weather Forecast" is as follows:
1. Suppose a subscriber has subscribed for the service "Weather Forecast". When the monthly fee is to be collected (suppose at the beginning of each month), responding to a charging request triggered by the time, the charging management system invokes a module "method for providing cost calculation strategy" in the charging plug-in "Monthly Charging + Charging per Use", and transfer to the module, as parameters, the monthly fee "300 cents", the fee per use "50 cents" and the calculation type "Monthly Fee" in the parameter setting, and obtains a charging result "300 cents";
2. Each time when the SP distributes weather information to the subscriber, responding to a charging request triggered by a service executing system, the charging management system invokes the "method for providing cost calculation strategy" in the charging plug-in "Monthly Charging + Charging per Use", and transfers to the module, as parameters, the monthly fee "300 cents ", the fee per use "50 cents " and the calculation type "Fee per Use" in the parameter setting, and obtains a charging result "50 cents".

It may be seen from above embodiments, by adopting a scheme of selecting a charging model or performing charging through loading charging plug-ins corresponding to various charging models, the charging plug-ins that provide charging models are independent of the charging management system per se, and the charging management system may obtain appropriate information from the charging plug-ins via standard interfaces. As a result, it is unnecessary to upgrade an existing charging management system when adding a new charging model, thus simplifying and speeding up development and deployment of new charging models, making development of charging models open, and speeding up diversification of data service charging models. Furthermore, the above embodiments also provide a variety of normalized plug-in interface arrangements, and demonstrate well how to actually implement a charging model with plug-ins.

## Claims

1. A method for providing a charging model, comprising:
receiving a charging model selection request related to a service;
providing charging plug-in IDs corresponding to various charging models respectively;
searching for a corresponding charging plug-in in accordance with a selected charging plug-in ID;
loading the corresponding charging plug-in, and obtaining a parameter defining item of the corresponding charging plug-in;
providing the parameter defining item and receiving a parameter setting obtained by setting a parameter based on the parameter defining item; and
storing the association between the service and the selected charging plug-in ID and the association between the service and the parameter setting.

2. The method according to claim 1, wherein:
the process of obtaining the parameter defining item of the corresponding charging plug-in comprises: obtaining a parameter-describing item of the corresponding charging plug-in; and
the process of setting the parameter based on the parameter defining item comprises: setting a parameter value for each parameter provided in the parameter-describing item.

3. The method according to claim 2, wherein:
the process of obtaining the parameter-describing item of the corresponding charging plug-in comprises: obtaining a name of each parameter of the corresponding charging plug-in and a parameter data type corresponding to each parameter name respectively;
the process of setting a parameter value for each parameter provided in the parameter-describing item comprises: setting a parameter value corresponding to each parameter name and to the data type corresponding to the parameter name.

4. The method according to claim 2 or 3, wherein, the process of obtaining a parameter defining item of the corresponding charging plug-in further comprises: obtaining the number of parameters of the corresponding charging plug-in, and, according to the number of parameters, obtaining a parameter-describing item for each parameter on a parameter-by-parameter basis.

5. The method according to any of claims 1 to 3, wherein, the charging plug-in ID is a name of a charging model corresponding to a charging plug-in; and
the process of providing charging plug-in IDs corresponding to various charging models respectively comprises: loading each charging plug-in, and obtaining the name of the charging model of the corresponding charging plug-in via a model name interface.

6. A system (20) for providing a charging model, comprising:
a request receiving unit (21), adapted to receive a charging model selection request related to a service;.
an ID providing unit (22), adapted to provide charging plug-in IDs corresponding respectively to various charging models;.
a searching unit (23), adapted to search for a corresponding charging plug-in in accordance with a selected charging plug-in ID;.
a loading unit (24), adapted to load the corresponding charging plug-in;.
a parameter definition interface (25) , adapted to obtain a parameter defining item of the corresponding charging plug-in;.
a setting/storage unit (26) , adapted to provide the parameter defining item and receive a parameter setting obtained by setting a parameter based on the parameter defining item, and store an association between the service and the selected charging plug-in ID and an association between the service and the parameter setting.

7. The system according to claim 6, wherein, the parameter definition interface (25) comprises a parameter description interface adapted to obtain a parameter-describing item of the corresponding charging plug-in.

8. The system according to claim 6, wherein, the parameter definition interface (25) comprises:
a parameter name interface adapted to obtain a name of each parameter of the corresponding charging plug-in; and
a parameter data type interface adapted to obtain a parameter data type corresponding to each parameter name.

9. A method for charging, comprising:
receiving a charging request related to a service;
determining a charging plug-in ID corresponding to the service in accordance with a stored association between the service and the charging plug-in ID, and searching for a charging plug-in corresponding to the charging plug-in ID;
loading the corresponding charging plug-in, and obtaining a cost calculation item of the corresponding charging plug-in;
obtaining a parameter setting related to the service in accordance with a stored association between the service and parameter setting, and substituting the parameter setting into a calculation method provided in the cost calculation item to obtain a charging result.

10. A charging management system (10), comprising a charging plug-in providing unit (11), a model setting unit (12) and a definition interface unit (14) ;
the charging plug-in providing unit (11) is adapted to provide a corresponding charging plug-in in accordance with a charging plug-in ID;
the model setting unit (12) is adapted to receive a charging model selection request related to a service, provide charging plug-in IDs corresponding to various charging models, search for a corresponding charging plug-in in accordance with a selected charging plug-in ID, provide a parameter defining item obtained via the definition interface unit (14) and receive a parameter setting obtained by setting a parameter based on the parameter defining item, and store an association between the service and the selected charging plug-in ID and an association between the service and the parameter setting; and
the definition interface unit (14) is adapted to load the corresponding charging plug-in from the charging plug-in providing unit (11) in accordance with a searching result from the model setting unit (12), obtain the parameter definition item of the corresponding charging plug-in, and provide the parameter definition item to the model setting unit (12) .

11. The charging management system (10) according to claim 10, further comprising a cost calculation unit (16) and a calculation interface unit (15) ;
the cost calculating unit (16) is adapted to receive a charging request related to the service, search for a corresponding charging plug-in in accordance with a charging plug-in ID corresponding to the service, obtain a calculation method from a cost calculation item provided by the calculation interface unit (15), and import a parameter setting related to the service to the calculation method to obtain a charging result;
the calculation interface unit(15) is adapted to load the corresponding charging plug-in from the charging plug-in providing unit (11) in accordance with a search result provided from the cost calculation unit (16), obtain the cost calculation item of the corresponding charging plug-in, and provide the cost calculation item to the cost calculation unit (16) .

12. The charging management system (10) according to claim 10 or 11, wherein, the definition interface unit (14) comprises a parameter description interface sub-unit (142), which is adapted to load the corresponding charging plug-in from the charging plug-in providing unit (11), obtain the parameter-describing item of the corresponding charging plug-in and provide the parameter-describing item to the model setting unit (12) ; and
the model setting unit (12) receives a parameter value that is set for each parameter provided in the parameter-describing item.

13. The charging management system (10) according to claim 12, wherein, the parameter description interface sub-unit(142) comprises a parameter name interface sub-unit(1421)adapted to obtain a parameter name of each parameter of the corresponding charging plug-in and a parameter data type interface sub-unit (1422) adapted to obtain a parameter data type corresponding to each parameter name; and
the parameter value received by the model setting unit (12) is a value corresponding to the parameter name and to the data type corresponding to the parameter name.

14. The charging management system(10)according to claim 12, wherein, the definition interface unit (14) further comprises a parameter number interface sub-unit (141), which is adapted to load the corresponding charging plug-in from the charging plug-in providing unit (11) and obtain the number of parameters of the corresponding charging plug-in; and
the parameter description interface sub-unit (142) obtains a parameter-describing item of each parameter on a parameter-by-parameter basis in accordance with the number of parameters.

15. The charging management system (10) according to claim 10 or 11, further comprising a name interface unit (13), which is adapted to load the corresponding charging plug-ins from the charging plug-in providing unit (11), obtain a charging model name of each charging plug-in and provide the charging model name to the model setting unit (12) ; and
the charging plug-in ID corresponding to each charging model and provided from the model setting unit (12) is a charging model name obtained via the name interface unit (13).

## Patentansprüche

1. Verfahren zum Bereitstellen eines Belastungsmodells, das Folgendes umfasst:
Empfangen einer mit einem Dienst in Beziehung stehenden Belastungsmodell-Auswahlanforderung;
Bereitstellen von Belastungs-Plugin-IDs, die jeweils verschiedenen Belastungsmodellen entsprechen;
Suchen nach einem entsprechenden Belastungs-Plugin in Übereinstimmung mit einer ausgewählten Belastungs-Plugin-ID;
Laden des entsprechenden Belastungs-Plugins und Erhalten eines Parameterdefinitionselements des entsprechenden Belastungs-Plugins;
Bereitstellen des Parameterdefinitionselements und Empfangen einer Parametereinstellung, die durch Einstellen eines Parameters auf Basis des Parameterdefinitionselements erhalten wird; und
Speichern der Zuordnung zwischen dem Dienst und der ausgewählten Belastungs-Plugin-ID und der Zuordnung zwischen dem Dienst und der Parametereinstellung.

2. Verfahren nach Anspruch 1, wobei:
der Prozess des Erhaltens des Parameterdefinitionselements des entsprechenden Belastungs-Plugins Folgendes umfasst: Erhalten eines Parameterbeschreibungselements des entsprechenden Belastungs-Plugins; und
der Prozess des Einstellens des Parameters auf Basis des Parameterdefinitionselements Folgendes umfasst: Einstellen eines Parameterwerts für jeden Parameter, der in dem Parameterbeschreibungselement bereitgestellt wird.

3. Verfahren nach Anspruch 2, wobei:
der Prozess des Erhaltens des Parameterbeschreibungselements des entsprechenden Belastungs-Plugins Folgendes umfasst: Erhalten eines Namens jedes Parameters des entsprechenden Belastungs-Plugins und eines Parameterdatentyps, der jedem entsprechenden Parameternamen entspricht;
der Prozess des Einstellens eines Parameterwerts für jeden Parameter, der in dem Parameterbeschreibungselement bereitgestellt wird, Folgendes umfasst: Einstellen eines Parameterwerts, der jedem Parameternamen und dem dem Parameternamen entsprechenden Datentyp entspricht.

4. Verfahren nach Anspruch 2 oder 3, wobei der Prozess des Erhaltens eines Parameterbeschreibungselements des entsprechenden Belastungs-Plugins ferner Folgendes umfasst: Erhalten der Anzahl von Parametern des entsprechenden Belastungs-Plugins und in Übereinstimmung mit der Anzahl von Parametern Erhalten eines Parameterbeschreibungselements für jeden Parameter auf einer parameterweisen Basis.

5. Verfahren nach einem der Ansprüche 1 bis 3, wobei die Belastungs-Plugin-ID ein Name eines Belastungsmodells ist, das einem Belastungs-Plugin entspricht; und
der Prozess des Bereitstellens von Belastungs-Plugin-IDs, die verschiedenen Belastungsmodellen entsprechen, jeweils Folgendes umfasst: Laden jedes Belastungs-Plugins und Erhalten des Namens des Belastungsmodells des entsprechenden Belastungs-Plugins über eine Modellnamenschnittstelle.

6. System (20) zum Bereitstellen eines Belastungsmodells, das Folgendes umfasst:
eine Anforderungsempfangseinheit (21), die dazu ausgelegt ist, eine mit einem Dienst in Beziehung stehende Belastungsmodell-Auswahlanforderung zu empfangen;
eine ID-Bereitstellungseinheit (22), die dazu ausgelegt ist, Belastungs-Plugin-IDs, die jeweils verschiedenen Belastungsmodellen entsprechen, bereitzustellen;
eine Sucheinheit (23), die dazu ausgelegt ist, ein entsprechendes Belastungs-Plugin in Übereinstimmung mit einer ausgewählten Belastungs-Plugin-ID zu suchen;
eine Ladeeinheit (24), die dazu ausgelegt ist, das entsprechende Belastungs-Plugin zu laden;
eine Parameterdefinitionsschnittstelle (25), die dazu ausgelegt ist, ein Parameterdefinitionselement des entsprechenden Belastungs-Plugins zu erhalten;
eine Einstell-/Speichereinheit (26), die dazu ausgelegt ist, das Parameterdefinitionselement bereitzustellen und eine Parametereinstellung zu empfangen, die durch Einstellen eines Parameters auf Basis des Parameterdefinitionselements erhalten wird, und eine Zuordnung zwischen dem Dienst und der ausgewählten Belastungs-Plugin-ID sowie eine Zuordnung zwischen dem Dienst und der Parametereinstellung zu speichern.

7. System nach Anspruch 6, wobei die Parameterdefinitionsschnittstelle (25) eine Parameterbeschreibungsschnittstelle umfasst, die dazu ausgelegt ist, ein Parameterbeschreibungselement des entsprechenden Belastungs-Plugins zu erhalten.

8. System nach Anspruch 6, wobei die Parameterdefinitionsschnittstelle (25) Folgendes umfasst:
eine Parameternamenschnittstelle, die dazu ausgelegt ist, einen Namen jedes Parameters des entsprechenden Belastungs-Plugins zu erhalten; und
eine Parameterdatentyp-Schnittstelle, die dazu ausgelegt ist, einen Parameterdatentyp, der jedem Parameternamen entspricht, zu erhalten.

9. Belastungsverfahren, das Folgendes umfasst:
Empfangen einer mit einem Dienst in Beziehung stehenden Belastungsanforderung;
Bestimmen einer Belastungs-Plugin-ID, die dem Dienst entspricht, in Übereinstimmung mit einer gespeicherten Zuordnung zwischen dem Dienst und der Belastungs-Plugin-ID und Suchen nach einem Belastungs-Plugin, das der Belastungs-Plugin-ID entspricht;
Laden des entsprechenden Belastungs-Plugins und Erhalten eines Kostenberechnungselements des entsprechenden Belastungs-Plugins;
Erhalten einer Parametereinstellung, die mit dem Dienst in Beziehung steht, in Übereinstimmung mit einer gespeicherten Zuordnung zwischen dem Dienst und der Parametereinstellung und Ersetzen der Parametereinstellung in einem Berechnungsverfahren, das in dem Kostenberechnungselement vorgesehen ist, um ein Belastungsergebnis zu erhalten.

10. Belastungsmanagementsystem (10), das eine Belastungs-Plugin-Bereitstellungseinheit (11), eine Modelleinstelleinheit (12) und eine Definitionsschnittstelleneinheit (14) umfasst;
wobei die Belastungs-Plugin-Bereitstellungseinheit (11) dazu ausgelegt ist, ein entsprechendes Belastungs-Plugin in Übereinstimmung mit einer Belastungs-Plugin-ID bereitzustellen;
die Modelleinstelleinheit (12) dazu ausgelegt ist, eine Belastungsmodell-Auswahlanforderung, die mit einem Dienst in Beziehung steht, zu empfangen, Belastungs-Plugin-IDs, die verschiedenen Belastungsmodellen entsprechen, bereitzustellen, nach einem entsprechenden Belastungs-Plugin in Übereinstimmung mit einer ausgewählten Belastungs-Plugin-ID zu suchen, ein Parameterdefinitionselement, das über die Definitionsschnittstelleneinheit (14) erhalten wird, bereitzustellen und eine Parametereinstellung, die durch Einstellen eines Parameters auf Basis des Parameterdefinitionselements erhalten wird, zu empfangen und eine Zuordnung zwischen dem Dienst und der ausgewählten Belastungs-Plugin-ID sowie eine Zuordnung zwischen dem Dienst und der Parametereinstellung zu speichern; und
die Definitionsschnittstelleneinheit (14) dazu ausgelegt ist, das entsprechende Belastungs-Plugin von der Belastungs-Plugin-Bereitstellungseinheit (11) in Übereinstimmung mit einem Suchergebnis von der Modelleinstelleinheit (12) zu laden, das Parameterdefinitionselement des entsprechenden Belastungs-Plugins zu erhalten und das Parameterdefinitionselement für die Modelleinstelleinheit (12) bereitzustellen.

11. Belastungsmanagementsystem (10) nach Anspruch 10, das ferner eine Kostenberechnungseinheit (16) und eine Berechnungsschnittstelleneinheit (15) umfasst;
wobei die Kostenberechnungseinheit (16) dazu ausgelegt ist, eine mit dem Dienst in Beziehung stehende Belastungsanforderung zu empfangen, nach einem entsprechenden Belastungs-Plugin in Übereinstimmung mit einer dem Dienst entsprechenden Belastungs-Plugin-ID zu suchen, ein Berechnungsverfahren aus einem Kostenberechnungselement, das durch die Berechnungsschnittstelleneinheit (15) bereitgestellt wird, zu erhalten und eine Parametereinstellung, die mit dem Dienst in Beziehung steht, in das Berechnungsverfahren zu importieren, um ein Belastungsergebnis zu erhalten;
die Berechnungsschnittstelleneinheit (15) dazu ausgelegt ist, das entsprechende Belastungs-Plugin von der Belastungs-Plugin-Bereitstellungseinheit (11) in Übereinstimmung mit einem Suchergebnis, das von der Kostenberechnungseinheit (16) bereitgestellt wird, zu laden, das Kostenberechnungselement des entsprechenden Belastungs-Plugins zu erhalten und das Kostenberechnungselement für die Kostenberechnungseinheit (16) bereitzustellen.

12. Belastungsmanagementsystem (10) nach Anspruch 10 oder 11, wobei die Definitionsschnittstelleneinheit (14) eine Parameterbeschreibungs-Schnittstellenuntereinheit (142) umfasst, die dazu ausgelegt ist, das entsprechende Belastungs-Plugin von der Belastungs-Plugin-Bereitstellungseinheit (11) zu laden, das Parameterbeschreibungselement des entsprechenden Belastungs-Plugins zu erhalten und das Parameterbeschreibungselement für die Modelleinstelleinheit (12) bereitzustellen; und
wobei die Modelleinstelleinheit (12) einen Parameterwert empfängt, der für jeden Parameter eingestellt wird, der in dem Parameterbeschreibungselement bereitgestellt wird.

13. Belastungsmanagementsystem (10) nach Anspruch 12, wobei die Parameterbeschreibungs-Schnittstellenuntereinheit (142) eine Parameternamen-Schnittstellenuntereinheit (1421), die dazu ausgelegt ist, einen Parameternamen jedes Parameters des entsprechenden Belastungs-Plugins zu erhalten, und eine Parameterdatentyp-Schnittstellenuntereinheit (1422), die dazu ausgelegt ist, einen Parameterdatentyp, der jedem Parameternamen entspricht, zu erhalten, umfasst; und der Parameterwert, der von der Modelleinstelleinheit (12) empfangen wird, ein Wert ist, der dem Parameternamen und dem dem Parameternamen entsprechenden Datentyp entspricht.

14. Belastungsmanagementsystem (10) nach Anspruch 12, wobei die Definitionsschnittstelleneinheit (14) ferner eine Parameteranzahl-Schnittstellenuntereinheit (141) umfasst, die dazu ausgelegt ist, das entsprechende Belastungs-Plugin von der Belastungs-Plugin-Bereitstellungseinheit (11) zu laden und die Anzahl von Parametern des entsprechenden Belastungs-Plugins zu erhalten; und
die Parameterbeschreibungs-Schnittstellenuntereinheit (142) ein Parameterbeschreibungselement jedes Parameters auf einer parameterweisen Basis in Übereinstimmung mit der Anzahl von Parametern erhält.

15. Belastungsmanagementsystem (10) nach Anspruch 10 oder 11, das ferner eine Namenschnittstelleneinheit (13) umfasst, die dazu ausgelegt ist, die entsprechenden Belastungs-Plugins von der Belastungs-Plugin-Bereitstellungseinheit (11) zu laden, einen Belastungsmodellnamen jedes Belastungs-Plugins zu erhalten und den Belastungsmodellnamen für die Modelleinstelleinheit (12) bereitzustellen; und
die Belastungs-Plugin-ID, die jedem Belastungsmodell entspricht und von der Modelleinstelleinheit (12) bereitgestellt wird, ein Belastungsmodellname ist, der über die Namenschnittstelleneinheit (13) erhalten wird.

## Revendications

1. Procédé de fourniture d'un modèle de facturation, comprenant :
la réception d'une requête de sélection de modèle de facturation liée à un service ;
la fourniture de plusieurs ID de plug-in de facturation correspondant respectivement à divers modèles de facturation ;
la recherche d'un plug-in de facturation correspondant en fonction d'une ID de plugin de facturation sélectionnée ;
le chargement du plug-in de facturation correspondant, et l'obtention d'un article de définition de paramètre du plug-in de facturation correspondant ;
la fourniture de l'article de définition de paramètre et la réception d'un réglage de paramètre obtenu en réglant un paramètre en fonction de l'article de définition de paramètre ; et
la mémorisation de l'association entre le service et l'ID de plug-in de facturation sélectionnée et de l'association entre le service et le réglage de paramètre.

2. Procédé selon la revendication 1, dans lequel :
le processus d'obtention de l'article de définition de paramètre du plug-in de facturation correspondant comprend : l'obtention d'un article de description de paramètre du plug-in de facturation correspondant ; et
le processus de réglage du paramètre en fonction de l'article de définition de paramètre comprend : le réglage d'une valeur de paramètre pour chaque paramètre indiqué dans l'article de description de paramètre.

3. Procédé selon la revendication 2, dans lequel :
le processus d'obtention de l'article de description de paramètre du plug-in de facturation correspondant comprend : l'obtention d'un nom de chaque paramètre du plug-in de facturation correspondant et d'un type de données de paramètre correspondant respectivement à chaque nom de paramètre ;
le processus de réglage d'une valeur de paramètre pour chaque paramètre indiqué dans l'article de description de paramètre comprend : le réglage d'une valeur de paramètre correspondant à chaque nom de paramètre et au type de données correspondant au nom de paramètre.

4. Procédé selon la revendication 2 ou 3, dans lequel le processus d'obtention d'un article de définition de paramètre du plug-in de facturation correspondant comprend :
l'obtention du nombre de paramètres du plug-in de facturation correspondant, et, en fonction du nombre de paramètres, l'obtention d'un article de description de paramètre pour chaque paramètre, paramètre par paramètre.

5. Procédé selon l'une quelconque des revendications 1 à 3, dans lequel l'ID de plug-in de facturation est un nom d'un modèle de facturation correspondant à un plug-in de facturation ; et
le processus de fourniture d'ID de plug-in de facturation correspondant à divers modèles de facturation comprend respectivement : le chargement de chaque plug-in de facturation, et l'obtention du nom du modèle de facturation du plug-in de facturation correspondant par l'intermédiaire d'une interface de nom de modèle.

6. Système (20) de fourniture d'un modèle de facturation, comprenant :
une unité de réception de requête (21), adaptée pour recevoir une requête de sélection de modèle de facturation liée à un service ;
une unité de fourniture d'ID (22), adaptée pour fournir plusieurs ID de plug-in de facturation correspondant respectivement à divers modèles de facturation ;
une unité de recherche (23), adaptée pour rechercher un plug-in de facturation correspondant en fonction d'une ID de plug-in de facturation sélectionnée ;
une unité de chargement (24), adaptée pour charger le plug-in de facturation correspondant ;
une interface de définition de paramètre (25), adaptée pour obtenir un article de définition de paramètre du plug-in de facturation correspondant ;
une unité de réglage/mémorisation (26), adaptée pour fournir l'article de définition de paramètre et recevoir un réglage de paramètre obtenu en réglant un paramètre en fonction de l'article de définition de paramètre, et mémoriser une association entre le service et l'ID de plug-in de facturation sélectionnée et une association entre le service et le réglage de paramètre.

7. Système selon la revendication 6, dans lequel l'interface de définition de paramètre (25) comprend une interface de description de paramètre adaptée pour obtenir un article de description de paramètre du plug-in de facturation correspondant.

8. Système selon la revendication 6, dans lequel l'interface de définition de paramètre (25) comprend :
une interface de nom de paramètre adaptée pour obtenir un nom de chaque paramètre du plug-in de facturation correspondant ; et
une interface de type de données de paramètre adaptée pour obtenir un type de données de paramètre correspondant à chaque nom de paramètre.

9. Procédé de facturation, comprenant :
la réception d'une requête de facturation liée à un service ;
la détermination d'une ID de plug-in de facturation correspondant au service en fonction d'une association mémorisée entre le service et l'ID de plug-in de facturation, et la recherche d'un plug-in de facturation correspondant à l'ID de plug-in de facturation ;
le chargement du plug-in de facturation correspondant, et l'obtention d'un article de calcul de coût du plug-in de facturation correspondant ;
l'obtention d'un réglage de paramètre lié au service en fonction d'une association mémorisée entre le service et le réglage de paramètre, et la substitution du réglage de paramètre dans un procédé de calcul fourni dans l'article de calcul de coût afin d'obtenir un résultat de facturation.

10. Système de gestion de facturation (10), comprenant une unité de fourniture de plugin de facturation (11), une unité de réglage de modèle (12) et une unité d'interface de définition (14) ;
l'unité de fourniture de plug-in de facturation (11) étant adaptée pour fournir un plugin de facturation correspondant en fonction d'une ID de plug-in de facturation ; l'unité de réglage de modèle (12) étant adaptée pour recevoir une requête de sélection de modèle de facturation liée à un service, fournir des ID de plug-in de facturation correspondant à divers modèles de facturation, rechercher un plug-in de facturation correspondant en fonction d'une ID de plug-in de facturation sélectionnée, fournir un article de définition de paramètre obtenu par l'intermédiaire de l'unité d'interface de définition (14) et recevoir un réglage de paramètre obtenu en réglant un paramètre en fonction de l'article de définition de paramètre, et mémoriser une association entre le service et l'ID de plug-in de facturation sélectionnée et une association entre le service et le réglage de paramètre ; et
l'unité d'interface de définition (14) étant adaptée pour charger le plug-in de facturation correspondant provenant de l'unité de fourniture de plug-in de facturation (11) en fonction d'un résultat de recherche provenant de l'unité de réglage de modèle (12), obtenir l'article de définition de paramètre du plug-in de facturation correspondant, et fournir l'article de définition de paramètre à l'unité de réglage de modèle (12).

11. Système de gestion de facturation (10) selon la revendication 10, comprenant en outre une unité de calcul de coût (16) et une unité d'interface de calcul (15) ;
l'unité de calcul de coût (16) étant adaptée pour recevoir une requête de facturation liée au service, rechercher un plug-in de facturation correspondant en fonction d'une ID de plug-in de facturation correspondant au service, obtenir un procédé de calcul à partir d'un article de calcul de coût fourni par l'unité d'interface de calcul (15), et importer un réglage de paramètre lié au service dans le procédé de calcul pour obtenir un résultat de facturation ;
l'unité d'interface de calcul (15) étant adaptée pour charger le plug-in de facturation correspondant provenant de l'unité de fourniture de plug-in de facturation (11) en fonction d'un résultat de recherche fourni par l'unité de calcul de coût (16), obtenir l'article de calcul de coût du plug-in de facturation correspondant, et fournir l'article de calcul de coût à l'unité de calcul de coût (16).

12. Système de gestion de facturation (10) selon la revendication 10 ou 11, dans lequel l'unité d'interface de définition (14) comprend une sous-unité d'interface de description de paramètre (142), laquelle est adaptée pour charger le plug-in de facturation correspondant provenant de l'unité de fourniture de plug-in de facturation (11), obtenir l'article de description de paramètre du plug-in de facturation correspondant et fournir l'article de description de paramètre à l'unité de réglage de modèle (12) ; et
l'unité de réglage de modèle (12) reçoit une valeur de paramètre qui est réglée pour chaque paramètre fourni dans l'article de description de paramètre.

13. Système de gestion de facturation (10) selon la revendication 12, dans lequel la sous-unité d'interface de description de paramètre (142) comprend une sous-unité d'interface de nom de paramètre (1421) adaptée pour obtenir un nom de paramètre de chaque paramètre du plug-in de facturation correspondant et une sous-unité d'interface de type de données de paramètre (1422) adaptée pour obtenir un type de données de paramètre correspondant à chaque nom de paramètre ; et
la valeur de paramètre reçue par l'unité de réglage de modèle (12) est une valeur correspondant au nom de paramètre et au type de données correspondant au nom de paramètre.

14. Système de gestion de facturation (10) selon la revendication 12, dans lequel l'unité d'interface de définition (14) comprend en outre une sous-unité d'interface de nombre de paramètres (141), laquelle est adaptée pour charger le plug-in de facturation correspondant provenant de l'unité de fourniture de plug-in de facturation (11) et obtenir le nombre de paramètres du plug-in de facturation correspondant ; et
la sous-unité d'interface de description de paramètre (142) obtient un article de description de paramètre de chaque paramètre, paramètre par paramètre, en fonction du nombre de paramètres.

15. Système de gestion de facturation (10) selon la revendication 10 ou 11, comprenant en outre une unité d'interface de nom (13), laquelle est adaptée pour charger les plugin de facturation correspondants provenant de l'unité de fourniture de plug-in de facturation (11), obtenir un nom de modèle de facturation de chaque plug-in de facturation et fournir le nom de modèle de facturation à l'unité de réglage de modèle (12) ; et
l'ID de plug-in de facturation correspondant à chaque modèle de facturation et fournie par l'unité de réglage de modèle (12) étant un nom de modèle de facturation obtenu par l'intermédiaire de l'unité d'interface de nom (13).
